# FASCICULE DE BREVET EUROPEEN

(11) **EP 1 900 315 B1**
(45) Date de publication et mention de la délivrance du brevet: **22.07.2009**
(21) Numéro de dépôt: 07356112.8
(22) Date de dépôt: 08.08.2007
(51) Int. Cl.: A47J 43/07

(54) **Mixeur ménager de type plongeant comportant un outil de travail présentant la forme d'une vis d'archimède**
Stabmixgerät, das ein Arbeitswerkzeug in Form einer Archimedischen Schraube umfasst
Immersed domestic mixer comprising a work tool in the shape of an Archimedes screw

(30) Priorité: 13.09.2006 FR 0608001
(43) Date de publication de la demande: 19.03.2008
(73) Titulaire: SEB SA, 69130 Ecully (FR)
(72) Inventeur: Lecerf, Joël, 50190 Periers (FR)
(74) Mandataire: Kiehl, Hubert

(56) Documents cités:
- WO-A-03/057355
- WO-A-20/06015403
- US-A- 1 915 053
- US-A- 3 589 834
- US-A- 5 727 742

## Description

La présente invention concerne le domaine technique général des appareils électroménager de préparation culinaire et se rapporte plus particulièrement à un mixeur ménager de type plongeant comportant un outil de travail en forme de vis d'Archimède, destiné notamment à monter les oeufs en neige.

Il est connu, du document US 2 525 421, un mixeur ménager comportant un outil de travail comportant une partie centrale en forme de vis d'Archimède, accouplée par son extrémité supérieure à un arbre moteur, l'outil de travail comportant également un batteur extérieur tournant à contre sens de la vis d'Archimède, à la périphérie de cette dernière. Un tel mixeur ménager présente cependant l'inconvénient d'être encombrant, relativement dangereux et peu efficace pour réaliser des émulsions et monter les blancs en neige.

Il est également connu, du document WO 2006/015403, un mixeur ménager comportant un outil de travail en forme de vis d'Archimède disposé dans une cloche de protection ouverte. Cette cloche de protection a pour but d'éviter que l'outil de travail ne vienne au contact des parois du récipient lors des préparations. Cependant, le mixeur ménager selon ce document présente l'inconvénient d'être peu efficace pour réaliser des émulsions et notamment monter les blancs en neige.

L'invention qui suit vise à pallier ces inconvénients en proposant un mixeur ménager de type plongeant muni d'un outil de travail permettant de réaliser des émulsions et monter les blancs en neige avec une plus grande efficacité. Un autre but de la présente invention est de proposer un outil de travail pour réaliser des émulsions qui soit efficace et peu encombrant.

Le but de l'invention est atteint par un mixeur ménager de type plongeant comportant un moteur entraînant un outil de travail destiné notamment à monter les blancs en neige, l'outil de travail présentant la forme d'une vis d'Archimède comportant un filet s'étendant hélicoïdalement autour d'un moyeu accouplé par son extrémité supérieure à un entraîneur solidaire en rotation du moteur, caractérisé en ce que l'appareil comporte une cloche de protection présentant une paroi périphérique enveloppant au moins 50% de la périphérie de l'outil de travail de manière à définir un volume de brassage essentiellement fermé autour de l'outil de travail lorsque la cloche de protection est appliquée contre le fond d'un récipient.

Par périphérie de l'outil de travail on entend la surface entourant radialement l'outil de travail depuis son extrémité inférieure jusqu'à son extrémité supérieure.

Une telle caractéristique présente l'avantage de définir un volume relativement fermé autour de l'outil en forme de vis d'Archimède de sorte que le liquide présent dans la cloche de protection est brassé plusieurs fois de suite par l'outil de travail avant d'être expulsé de la cloche de protection. On obtient ainsi une efficacité plus grande de l'outil. De plus, la présence d'une cloche de protection fermée à plus de 50 % autour de l'outil présente l'avantage de limiter les risques d'éclaboussures lors de la réalisation de la préparation.

Selon une autre caractéristique de l'invention, le filet comporte un bord supérieur qui présente, dans un plan de coupe longitudinal au moyeu, une surface s'étendant radialement de la base à la périphérie du filet possédant, au moins localement, une pente positive.

Une telle caractéristique présente l'avantage de limiter la centrifugation du liquide présent sur le bord supérieur du filet lors de la rotation de l'outil de travail, la pente positive de la surface supérieure formant une partie surélevée freinant l'expulsion radiale du liquide.

Selon une autre caractéristique de l'invention, le filet présente, dans un plan de coupe longitudinal au moyeu, un bord supérieur sensiblement rectiligne qui est incliné vers l'extrémité supérieure du moyeu.

Selon une autre caractéristique de l'invention, l'inclinaison α du bord supérieur du filet par rapport à la perpendiculaire à l'axe du moyeu est comprise entre 5° et 25°.

Selon une autre caractéristique de l'invention, le filet présente une profondeur comprise entre 3 et 6 mm.

Par profondeur du filet on entend la différence entre le diamètre extérieur du filet et le diamètre intérieur du filet.

Selon encore une autre caractéristique de l'invention, l'extrémité inférieure du filet s'étend jusqu'à proximité du plan inférieur de la cloche de protection de sorte que, lorsque la cloche de protection est appliquée contre le fond d'un récipient, l'extrémité inférieure du filet se trouve à moins de 3 mm du fond plat d'un récipient.

Une telle caractéristique permet d'avoir une plus grande efficacité de brassage.

L'invention concerne également un outil de travail amovible pour monter les blancs en neige, destiné notamment à équiper un appareil électroménager tel que précédemment décrit, caractérisé en ce que l'outil de travail présente la forme d'une vis d'Archimède comportant un filet s'étendant hélicoïdalement autour d'un moyeu présentant une extrémité supérieure solidaire d'une cloche de protection sur laquelle il est monté rotatif, la cloche de protection présentant une paroi périphérique enveloppant au moins 50% d'une surface entourant radialement la vis d'Archimède depuis son extrémité inférieure jusqu'à son extrémité supérieure.

Selon une autre caractéristique de l'invention, le filet comporte un bord supérieur qui présente, dans un plan de coupe longitudinal au moyeu, une surface s'étendant radialement de la base à la périphérie du filet possédant, au moins localement, une pente positive.

Selon une autre caractéristique de l'invention, le filet présente, dans un plan de coupe longitudinal au moyeu, un bord supérieur sensiblement rectiligne qui est incliné vers l'extrémité supérieure du moyeu.

Selon une autre caractéristique de l'invention, l'extrémité inférieure du filet s'étend jusqu'à proximité du plan inférieur de la cloche de protection.

On comprendra mieux les buts, aspects et avantages de la présente invention, d'après la description donnée ci-après d'un mode particulier de réalisation de l'invention, présenté à titre d'exemple non limitatif, en se référant aux dessins annexés dans lesquels :
- la figure 1 est une vue en perspective d'un mixeur ménager selon un mode particulier de réalisation de l'invention avec l'outil de travail démonté ;
- la figure 2 est une vue en perspective similaire à la figure 1 lorsque l'outil de travail est monté sur le mixeur ménager ;
- la figure 3 est une vue en coupe longitudinale, selon le plan passant par les deux boutons de déverrouillage, de l'outil de travail amovible avec sa cloche de protection ;
- la figure 4 est une vue en coupe partielle, longitudinale, de l'outil rotatif avec sa cloche de protection, sur laquelle seule la cloche est représentée en coupe ;
- la figure 5 est une vue en perspective de l'outil de travail avec sa cloche de protection.

Seuls les éléments nécessaires à la compréhension de l'invention ont été représentés. Pour faciliter la lecture des dessins les mêmes éléments portent les mêmes références d'une figure à l'autre.

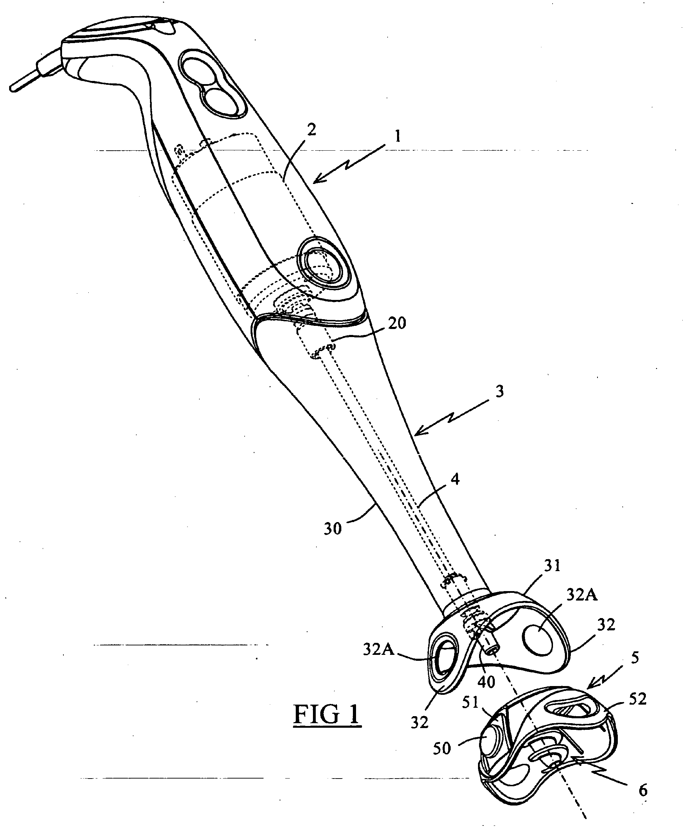

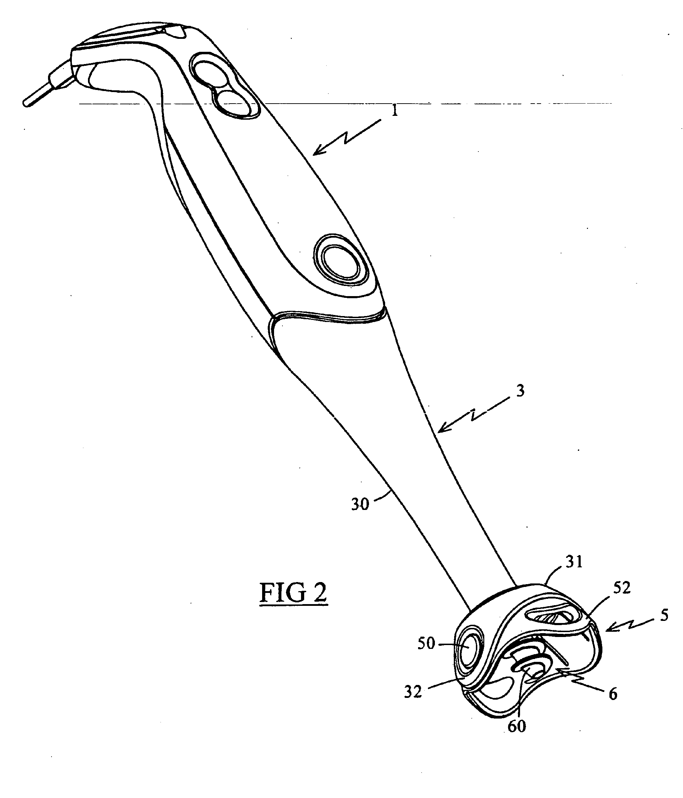

Les figures 1 et 2 représentent un mixeur ménager de préparation culinaire comportant un boîtier 1 renfermant, de manière connue en soi, un moteur 2 représenté schématiquement en pointillé sur la figure 1. Le moteur 2 est agencé selon l'axe longitudinal du boîtier 1 et possède un arbre de sortie muni d'un entraîneur rotatif 20 traversant une ouverture pratiquée à l'extrémité longitudinale du boîtier 1.

Sur la partie inférieure du boîtier est monté, de façon amovible ou non, un pied de mixage 3 comprenant un fût tubulaire 30 réalisé avantageusement en matière plastique ou en acier inox, le fût tubulaire 30 renfermant un arbre 4 dont l'extrémité supérieure vient s'accoupler avec l'entraîneur rotatif 20 du moteur.

La partie inférieure du pied de mixage 3 comporte une cloche de fixation 31 au centre de laquelle débouche un entraîneur solidaire 40 de l'extrémité inférieure de l'arbre 4. La cloche de fixation 31 comporte deux lobes 32 munis d'une ouverture circulaire 32A dans laquelle peut venir s'engager un bossage 50, porté par une cloche de protection 5 amovible présentant une taille et une forme adaptées pour s'insérer à l'intérieur de la cloche de fixation 31 en épousant la forme de cette dernière.

Les bossages 50 sont préférentiellement disposés à l'extrémité de languettes élastiques 51 de sorte que la cloche de protection 5 est immobilisée sur la cloche de fixation 31 par l'insertion des bossages 50 dans les ouvertures 32A, sous le rappel élastique des languettes 51, et peut être facilement enlevée de la cloche de fixation 31 en appuyant sur les bossages 50 qui forment alors des boutons de déverrouillage.

Un outil de travail 6 est fixé au centre de la cloche de protection 5, cette dernière assurant une protection périphérique de l'outil de travail 6 lorsque ce dernier est démonté du pied de mixage 3.

Plus particulièrement selon l'invention, l'outil de travail 6 présente la forme d'une vis d'Archimède qui est montée rotative par rapport à la cloche de protection 5, cette vis d'Archimède comportant un moyeu central 60 qui vient s'accoupler par son extrémité supérieure à l'entraîneur 40 disposé au centre de la cloche de fixation 31.

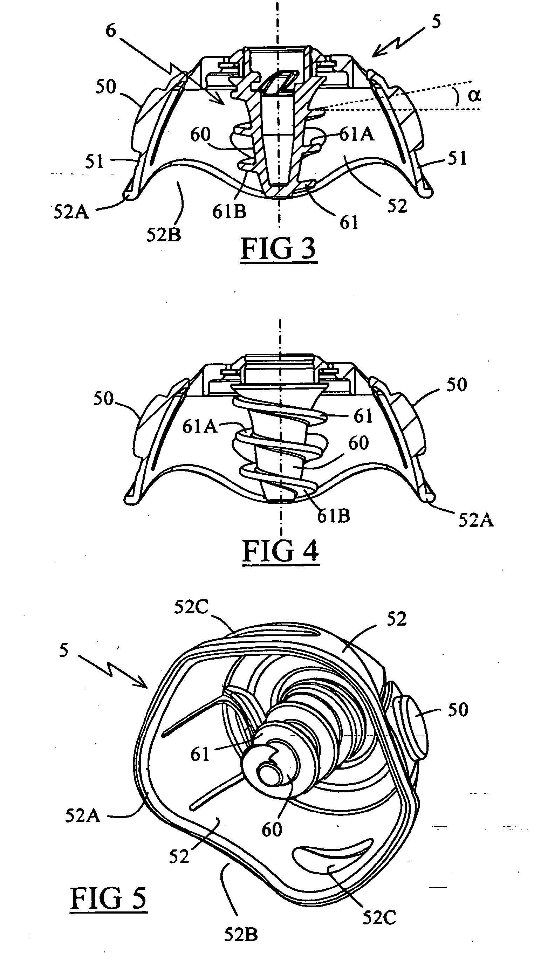

Conformément aux figures 3 à 5, la cloche de protection 5 comporte une paroi périphérique 52 définissant autour de l'outil de travail 6 une enceinte essentiellement fermée lorsque la cloche de protection 5 est appliquée contre le fond sensiblement plat d'un récipient, non représenté sur les figures. La cloche de protection 5 est avantageusement réalisée en matière plastique ou en matériau métallique, tel que de l'acier inox, et présente avantageusement une forme symétrique par rapport à l'axe de rotation de l'outil de travail 6.

A titre d'exemple, la cloche de protection 5 présente un diamètre de l'ordre de 70 mm au niveau de son extrémité inférieure ouverte et forme une enceinte autour de l'outil de travail présentant un volume de l'ordre de 50 cm³.

La cloche de protection 5 comporte un bord inférieur faiblement ondulé de sorte qu'elle présente, en vue de côté, des lobes 52A en alternance avec des parties échancrées 52B. Ces parties échancrées 52B, qui présentent une hauteur maximum de l'ordre 8 mm, forment des ouvertures permettant un flux de transfert avec l'extérieur de la cloche de protection 5 et un renouvellement progressif du liquide, tel que du blanc d'oeuf, qui est brassé dans la cloche de protection 5.

Ces flux d'échange par les parties échancrées 52B est complété par un flux supplémentaire s'effectuant au travers d'ouvertures latérales 52C, en forme de haricot, formées dans les lobes 52A de la cloche de protection et visibles sur la figure 5.

Ces ouvertures latérales 52C, ainsi que les parties échancrées 52A du bord inférieur de la cloche 5, sont nécessaires pour permettre le renouvellement du liquide brassé par l'outil de travail 6. Cependant, la demanderesse s'est rendue compte que la section de passage définie par ces parties échancrées 52A et ouvertures latérales 52C ne devait pas non plus être trop importante pour obtenir une bonne efficacité de l'outil de travail 6 dans la réalisation des oeufs en neige.

En particulier et conformément à l'invention, la paroi périphérique 52 de la cloche de protection 5 doit couvrir au moins 50% de la périphérie de l'outil de travail 6. Par périphérie de l'outil de travail 6, on entend la zone entourant radialement l'outil de travail depuis son extrémité supérieure jusqu'à son extrémité inférieure.

Le moyeu 60 de l'outil de travail est préférentiellement conique et est entouré d'un filet 61 s'étendant hélicoïdalement de l'extrémité inférieure du moyeu 60 à l'extrémité supérieure du moyeu 60 de telle sorte que la rotation de l'outil de travail 6, lors du fonctionnement du moteur 2, entraîne la remontée du liquide le long du bord supérieur 61 A du filet.

De manière avantageuse, et comme on peut mieux le voir sur la figure 3 représentant l'outil de travail 6 en coupe, le bord supérieur 61 A du filet est incliné en direction de l'extrémité supérieure du moyeu 60, par rapport à la direction orthogonale à l'axe du moyeu 60, de manière à obtenir un effet gouttière et éviter le déversement radial trop rapide du liquide en dehors du filet 61 sous l'effet de la force centrifuge lors de la rotation de l'outil 6.

Une telle caractéristique permet d'augmenter l'efficacité de l'outil de travail 6 et de réduire notablement le temps nécessaire à la réalisation de la préparation.

A titre d'exemple, la profondeur du filet 61 est avantageusement comprise entre 3 à 6 mm, et préférentiellement de l'ordre de 4,5 mm, et l'inclinaison α du filet est avantageusement comprise entre 5 et 25°, et préférentiellement de l'ordre de 10°. Le bord inférieur 61B du filet est avantageusement rectiligne et parallèle au bord supérieur 61A du filet, l'épaisseur du filet 61 étant de l'ordre de 1,5 mm et le pas de la vis d'Archimède de l'ordre de 8 mm.

Le filet 61 de l'outil de travail 6 s'étend préférentiellement jusqu'à proximité immédiate du plan passant par les extrémités inférieures des lobes 52A de la cloche de protection 5 de sorte que l'extrémité inférieure du filet 61 se trouve à moins de 3 mm du fond du récipient lorsque la cloche de protection 5 est appliquée contre le fond d'un récipient.

Un tel outil de travail disposé dans une telle cloche de protection essentiellement fermé présente l'avantage d'être très efficace pour monter les blancs en neige et de posséder un encombrement réduit qui le rend parfaitement adapté à une utilisation sur un pied de mixage. Il présente également l'avantage de pouvoir être monté et démonté facilement et très rapidement du pied de mixage, sans utiliser d'outils extérieurs. En particulier, la présence de la cloche de protection entourant l'outil rotatif amovible simplifie grandement la préhension de l'outil et permet de monter ou de nettoyer l'outil sans risque de se blesser.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, l'outil de travail et la cloche de protection pourront être fixés de manière non amovible au fût tubulaire du pied de mixage.

## Revendications

1. Mixeur ménager de type plongeant comportant un moteur (2) entraînant un outil de travail (6) destiné notamment à monter les blancs en neige, ledit outil de travail (6) présentant la forme d'une vis d'Archimède comportant un filet (61) s'étendant hélicoïdalement autour d'un moyeu (60) accouplé par son extrémité supérieure à un entraîneur (40) solidaire en rotation du moteur, **caractérisé en ce que** l'appareil comporte une cloche de protection (5) présentant une paroi périphérique (52) enveloppant au moins 50% d'une surface entourant radialement l'outil de travail (6) depuis son extrémité inférieure jusqu'à son extrémité supérieure de manière à définir un volume de brassage relativement fermé autour dudit outil de travail (6) lorsque la cloche de protection (5) est appliquée contre le fond d'un récipient.

2. Appareil électroménager selon la revendication 1, **caractérisé en ce que** ledit filet (61) comporte un bord supérieur (61A) qui présente, dans un plan de coupe longitudinal au moyeu (60), une surface s'étendant radialement de la base à la périphérie du filet possédant, au moins localement, une pente positive.

3. Appareil électroménager selon la revendication 2, **caractérisé en ce que** le filet (61) présente, dans un plan de coupe longitudinal au moyeu (60), un bord supérieur (61A) sensiblement rectiligne qui est incliné vers l'extrémité supérieure du moyeu (60).

4. Appareil électroménager selon la revendication 3, **caractérisé en ce que** l'inclinaison α du bord supérieur du filet par rapport à la perpendiculaire à l'axe du moyeu (60) est comprise entre 5° et 25°.

5. Appareil électroménager selon l'une quelconque des revendications 1 à 4, **caractérisé en ce que** le filet (61) présente une profondeur comprise entre 3 et 6 mm.

6. Appareil électroménager selon l'une quelconque des revendications 1 à 5, **caractérisé en ce que** l'extrémité inférieure du filet (61) s'étend jusqu'à proximité du plan inférieur de la cloche de protection (5) de sorte que, lorsque la cloche de protection (5) est appliquées contre le fond d'un récipient, l'extrémité inférieure du filet (61) se trouve à moins de 3 mm du fond plat d'un récipient.

7. Outil de travail amovible pour monter les blancs en neige, destiné notamment à équiper un appareil électroménager selon l'une quelconque des revendications 1 à 6, **caractérisé en ce que** l'outil de travail (6) présente la forme d'une vis d'Archimède comportant un filet (61) s'étendant hélicoïdalement autour d'un moyeu (60) présentant une extrémité supérieure solidaire d'une cloche de protection (5) sur laquelle il est monté rotatif, ladite cloche de protection (5) présentant une paroi périphérique (52) enveloppant au moins 50% d'une surface entourant radialement la vis d'Archimède depuis son extrémité inférieure jusqu'à son extrémité supérieure.

8. Outil de travail amovible selon la revendication 7, **caractérisé en ce que** ledit filet comporte un bord supérieur (61 A) qui présente, dans un plan de coupe longitudinal au moyeu (60), une surface s'étendant radialement de la base à la périphérie du filet (61) possédant, au moins localement, une pente positive.

9. Outil de travail amovible selon la revendication 8, **caractérisé en ce que** le filet (61) présente, dans un plan de coupe longitudinal au moyeu (60), un bord supérieur (61 A) sensiblement rectiligne qui est incliné vers l'extrémité supérieure du moyeu (60).

10. Outil de travail amovible selon l'une quelconque des revendications 7 à 9, **caractérisé en ce que** l'extrémité inférieure du filet (61) s'étend jusqu'à proximité du plan inférieur de la cloche de protection (5).

## Claims

1. A household blender appliance of the immersion blender type having a motor (2) driving a work tool (6) designed in particular to beat egg whites, said work tool (6) being in the shape of an Archimedes screw provided with a thread (61) extending helically about a hub (60) coupled via its top end to a driver (40) constrained to rotate with the motor, said blender appliance being **characterized in that** it is provided with a protective bell (5) having a peripheral wall (52) enveloping at least 50% of a surface radially surrounding the work tool (6) from its bottom end to its top end in such a manner as to define a relatively closed mixing volume around said work tool (6) when the protective bell (5) is pressed against the bottom of a receptacle.

2. A household electrical appliance according to claim 1, **characterized in that** said thread (61) has a top edge (61A) that, in a section plane extending longitudinally to the hub (60), has a surface extending radially from the base of the thread to the periphery thereof that, at least locally, has a positive gradient.

3. A household electrical appliance according to claim 2, **characterized in that**, in a section plane extending longitudinally to the hub (60), the thread (61) has a substantially rectilinear top edge (61A) that slopes towards the top end of the hub (60).

4. A household electrical appliance according to claim 3, **characterized in that** the slope α of the top edge of the thread relative to the perpendicular to the axis of the hub (60) lies in the range 5° to 25°.

5. A household electrical appliance according to any one of claims 1 to 4, **characterized in that** the thread (61) has a depth lying in the range 3 mm to 6 mm.

6. A household electrical appliance according to any one of claims 1 to 5, **characterized in that** the bottom end of the thread (61) extends to the vicinity of the bottom plane of the protective bell (5) so that, when the protective bell (5) is pressed against the bottom of a receptacle, the bottom end of the thread (61) finds itself less than 3 mm away from the flat bottom of a receptacle.

7. A removable work tool for beating egg whites and designed, in particular, to equip a household electrical appliance according to any one of claims 1 to 6, **characterized in that** the work tool (6) is in the shape of an Archimedes screw provided with a thread (61) extending helically about a hub (60) that has a top end that is secured to a protective bell (5) on which it is mounted to rotate, said protective bell (5) having a peripheral wall (52) enveloping at least 50% of a surface radially surrounding the Archimedes screw from its bottom end to its top end.

8. A removable work tool according to claim 7, **characterized in that** said thread has a top edge (61A) that, in a section plane extending longitudinally to the hub (60), has a surface extending radially from the base of the thread (61) to the periphery thereof that, at least locally, has a positive gradient.

9. A removable work tool according to claim 8, **characterized in that**, in a section plane extending longitudinally to the hub (60), the thread (61) has a substantially rectilinear top edge (61A) that slopes towards the top end of the hub (60).

10. A removable work tool according to any one of claims 7 to 9, **characterized in that** the bottom end of the thread (61) extends to the vicinity of the bottom plane of the protective bell (5).

## Patentansprüche

1. Haushaltsmixer vom tauchenden Typ, mit einem Motor (2), der ein Arbeitswerkzeug (6) antreibt, das insbesondere dazu bestimmt ist, Eiweiß zu Schnee zu schlagen, wobei das Arbeitswerkzeug (6) die Form einer archimedischen Schraube aufweist, die ein Gewinde (61) umfasst, das sich wendelförmig um eine Nabe (60) erstreckt, die über ihr oberes Ende mit einem Mitnehmer (40) gekoppelt ist, der mit dem Motor fest drehverbunden ist, **dadurch gekennzeichnet, dass** das Gerät eine Schutzglocke (5) umfasst, die eine umlaufende Wand (52) aufweist, die mindestens 50% einer das Arbeitswerkzeug (6) radial von seinem unteren Ende bis zu seinem oberen Ende umgebenden Fläche umhüllt, so dass ein um das Arbeitswerkzeug (6) relativ geschlossenes Vermischungsvolumen definiert ist, wenn die Schutzglocke (5) gegen den Boden eines Behälters angelegt wird.

2. Elektrohaushaltsgerät nach Anspruch 1, **dadurch gekennzeichnet, dass** das Gewinde (61) einen oberen Rand (61A) umfasst, der in einer Längsschnittebene bezüglich der Nabe (60) eine Fläche aufweist, die sich radial von der Basis bis zum Umfang des Gewindes erstreckt, das mindestens örtlich eine positive Neigung besitzt.

3. Elektrohaushaltsgerät nach Anspruch 2, **dadurch gekennzeichnet, dass** das Gewinde (61) in einer Längsschnittebene bezüglich der Nabe (60) einen oberen Rand (61A) aufweist, der im Wesentlichen geradlinig und zum oberen Ende der Nabe (60) geneigt ist.

4. Elektrohaushaltsgerät nach Anspruch 3, **dadurch gekennzeichnet, dass** die Neigung α des oberen Rands des Gewindes bezüglich der Senkrechten zur Achse der Nabe (60) zwischen 5° und 25° beträgt.

5. Elektrohaushaltsgerät nach einem der Ansprüche 1 bis 4, **dadurch gekennzeichnet, dass** das Gewinde (61) eine Tiefe zwischen 3 und 6 mm aufweist.

6. Elektrohaushaltsgerät nach einem der Ansprüche 1 bis 5, **dadurch gekennzeichnet, dass** sich das untere Ende des Gewindes (61) bis in die Nähe der unteren Ebene der Schutzglocke (5) erstreckt, so dass, wenn die Schutzglocke (5) gegen den Boden eines Behälters angelegt wird, sich das untere Ende des Gewindes (61) im Abstand von weniger als 3 mm vom flachen Boden eines Behälters befindet.

7. Abnehmbares Arbeitswerkzeug zum Schlagen von Eiweiß zu Schnee, das insbesondere dazu bestimmt ist, ein Elektrohaushaltsgerät nach einem der Ansprüche 1 bis 6 auszustatten, **dadurch gekennzeichnet, dass** das Arbeitswerkzeug (6) die Form einer archimedischen Schraube aufweist, die ein Gewinde (61) umfasst, das sich wendelförmig um eine Nabe (60) erstreckt, die ein oberes Ende aufweist, das mit einer Schutzglocke (5) fest verbunden ist, an welcher sie drehbar angebracht ist, wobei die Schutzglocke (5) eine umlaufende Wand (52) aufweist, die mindestens 50% einer radial die archimedische Fläche von seinem unteren Ende bis zu seinem oberen Ende umgebenden Fläche umhüllt.

8. Abnehmbares Arbeitswerkzeug nach Anspruch 7, **dadurch gekennzeichnet, dass** das Gewinde einen oberen Rand (61 A) umfasst, der in einer Längsschnittebene bezüglich der Nabe (60) eine Fläche aufweist, die sich radial von der Basis bis zum Umfang des Gewindes (61) erstreckt, das mindestens örtlich eine positive Neigung besitzt.

9. Abnehmbares Arbeitswerkzeug nach Anspruch 8, **dadurch gekennzeichnet, dass** das Gewinde (61) in einer Längsschnittebene bezüglich der Nabe (60) einen oberen Rand (61 A) aufweist, der im Wesentlichen geradlinig ist und zum oberen Ende der Nabe (60) geneigt ist.

10. Abnehmbares Arbeitswerkzeug nach einem der Ansprüche 7 bis 9, **dadurch gekennzeichnet, dass** sich das untere Ende des Gewindes (61) bis in die Nähe der unteren Ebene der Schutzglocke (5) erstreckt.
